# EUROPEAN PATENT SPECIFICATION

(11) **EP 0 365 870 B1**
(45) Date of publication and mention of the grant of the patent: **02.03.1994**
(21) Application number: 89118226.3
(22) Date of filing: 02.10.1989
(51) Int. Cl.: B65H 31/30

(54) **Signature handling apparatus**
Handhabungsvorrichtung für Signaturen
Dispositif de manipulation de cahiers

(30) Priority: 24.10.1988 US 261394
(43) Date of publication of application: 02.05.1990
(73) Proprietor: AM INTERNATIONAL INCORPORATED, Chicago Illinois 60606-1265 (US)
(72) Inventor: Bryson, Robert A., Sr., Huber Heights Ohio 45424 (US)
(74) Representative: Rottmann, Maximilian R.

(56) References cited:
- DE-A- 2 719 991
- FR-A- 2 406 587
- US-A- 3 874 522
- US-A- 4 462 735

## Description

The present invention relates to an apparatus for use in building and handling stacks of signatures according to claim 1.

### Background of the Invention

It is common practice to print portions of a newspaper, called inserts, and to store these portions prior to collating the newspaper for delivery. It is equally common practice to print portions of a book, magazine, etc. called signatures, and to store these portions prior to collating. US-Prior Patent No. 4,538,511, to James C. Wise, assigned to the assignee of the present application, entitled "Signature Handling Apparatus", discloses a system for stacking signatures. A transfer vehicle is movable to the stacker to clamp onto a stack and transfer that stack to an adjacent tying station where the stack is tied to form a log or bundle. The transfer vehicle maintains positive engagement with the stack as it moves the stack from the tying station to a stack-delivery station.

Related embodiments of the system of the '511 patent are disclosed in prior US-Patent No. 4,541,763 (Chandhoke et al.), entitled "Apparatus for Forming a Stack of Signatures". This patent is also assigned to the assignee of the present application.

In prior US-Patent No. 4,498,381, to Frank H. Convey, Jr., assigned to the assignee of the present application, there is disclosed a further embodiment of the system of the '511 patent in which there is provided a clamping mechanism capable of bringing end boards to the stacker, and depositing the end boards on the stack as the clamping mechanism engages a stack. The clamping mechanism also has independently movable clamp members that can move to different coextants in applying pressure to different portions of a stack of signatures during the clamping process.

Also in the prior art is US-Patent No. 4,462,735 to Bain et al., which discloses a system for handling newspapers whereby a reserve supply of newspapers can be maintained capable of compensating for unintentional shutdown of a printing press. In the '735 patent, an endless conveyor has carriers adapted to travel about the pathway of the conveyor and to removably support newspaper containers. A pair of spaced transfer conveyors operatively associated with the endless conveyor are adapted to sequentially receive and then return the containers to the endless conveyor. On one transfer conveyor the containers are positioned by an indexing member at a location for receiving a stack of newspapers, and on the other transfer conveyor the containers are indexed to a position where the newspapers are unloaded for further processing.

In prior art publication DE-A-2 719 991 there is disclosed an assembly for storing semi-finished products which are ejected from a printing machine and for transporting the same to a further processing machine, including at least one transport magazine incorporating a clamping device for receiving and clamping the semi-finished products. Further, that assembly comprises a device for filling the magazines, provided with a pressing device, and a magazine unloading device. The device for filling the magazines consists of a stacker member and a magazine support member to which the pressing device is assigned. The stack formed in the stacker member is movable into the magazine support member by means of a transport device.

The prior art US-A-3 874 522 discloses a similar system, but for building and handling arrays and not stack of signatures.

### Brief Description of the Present Invention

The present invention resides in an improved system for handling and storing printed products such as inserts and signatures, hereinafter referred to as signatures, prior to their being collated to form a newspaper, magazine, book, etc.

More specifically, the present invention resides in an improved handling system wherein stacks of signatures are placed in a container and handled and stored as a group. By the term "group", for purposes of the present application, it is meant two or more stacks of signatures. By grouping the stacks of signatures in a container, the risk of stacks toppling over or falling off of a pallet is reduced. Also, the risk of damage to signatures is reduced thereby making the collating operation more efficient and less likely to be subject to misfeed problems due to signature damage. Still further, grouping the stacks of signatures facilitates movement of the signatures and overall processing in the printing and collating plant.

The present invention resides in an improved system for building and handling stacks of signatures which comprises the features defined in claim 1.

After the cells of the container are filled, the container with the signatures therein may be stored. The container maintains the signatures in a uniform stack and protects the signatures from damage. At the appropriate time, the container is moved to a collator where the stacks are removed from the container and the signatures are collated with other printed products to form a newspaper, magazine, book, etc.

In a preferred embodiment of the present invention, the containers comprise an elongated, longitudinally extending, axial central support and longitudinally extending wall means emanating from said support in a pin-wheel fashion defining an array of longitudinally extending, generally rectangular, open-top, cells positioned radially around the support. This permits the containers to be rotatably indexed at the stacker for sequentially loading the container cells, and to be rotatably indexed at the collator for sequentially unloading the container cells.

### Brief Description of the Drawings

The invention and advantages thereof will become more apparent upon consideration of the following specification, with reference to the accompanying drawings, in which:
Figure 1 is a perspective view of a signature handling system in accordance with the concepts of the present invention;
Figure 2 is a side elevation view of a stacker of the system of Fig. 1, showing stacking of signatures conveyed from a printing press; and
Figure 3 is a front elevation view of a container unloading mechanism in the system of Fig. 1.

### Description of a Preferred Embodiment

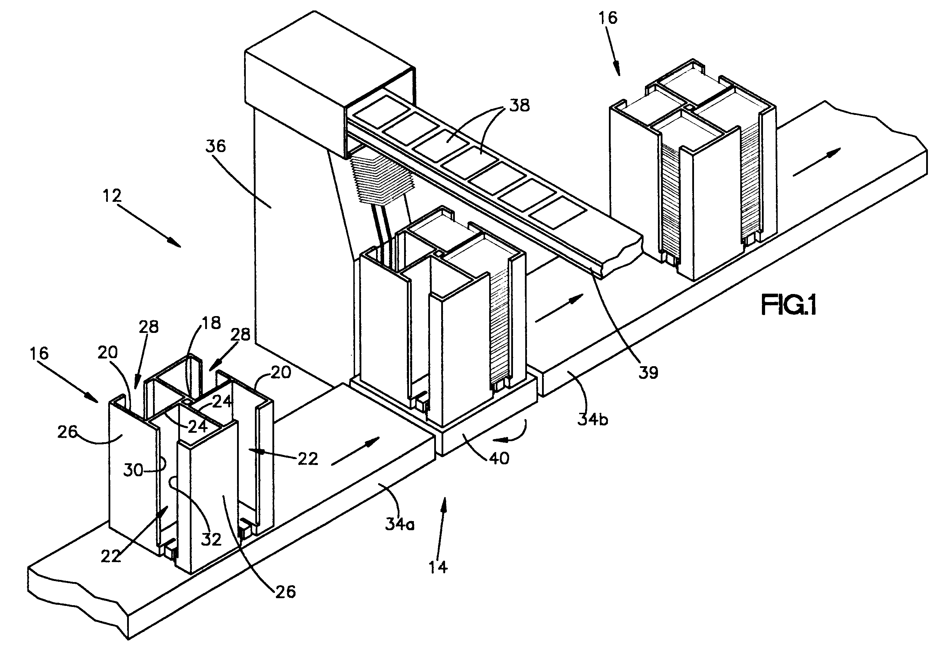

Referring to Fig. 1, the signature handling system 12 of the present invention comprises a conveyor assembly 14 made up of a plurality of sections to be described. Only a part of the conveyor assembly is shown in Fig. 1.

Positioned on the conveyor assembly are a plurality of containers 16 in various stages in the handling system. Each container is an upright member having a rectangular cross-section and a central, longitudinally extending, square, tubular central support 18. Four L-shaped dividers 20 extend outwardly from the support 18 somewhat in the shape of a swastika arranged to form four separate cubical cells 22 arranged radially around the central support 18.

As shown, each L-shaped divider 20 comprises an inner flat wall surface or leg 24 which is common to adjacent cells. Attached to the free edge of each leg 24, at right angles to the leg, is an outer flat wall 26. Each wall 26 defines an outer surface portion of the adjacent cells 22. Each cell 22 is enclosed on three sides and substantially open on a fourth side 28, except for stack retaining flanges 30 and 32 located along opposite longitudinally extending edges of each of the open sides and formed by adjacent parts of adjacent outer walls 26.

A main run of the conveyor assembly comprises sections 34a and 34b which are positioned on opposite sides of the front of a stacker 36. The stacker 36 is adapted to load stacks of signatures into the individual cells 22 of the container 16. These signatures, identified with the numeral 38, are transferred to the stacker from a printing press (not shown) by means of a conveyor 39.

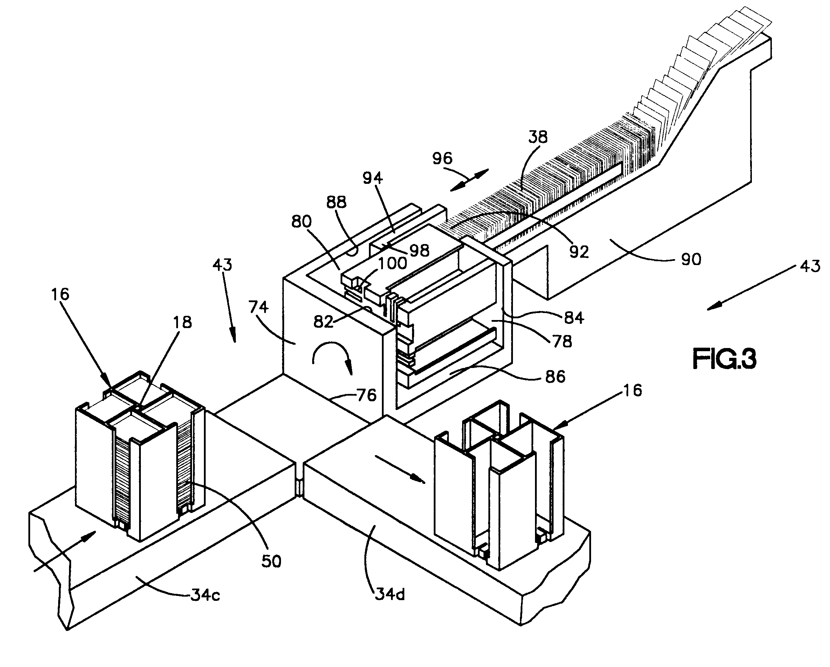

At the stacker, the conveyor assembly 14 includes an indexing mechanism 40 in the form of a rotatable square platform onto which the advancing containers are positioned by the conveyor section 34a, the conveyor sections 34a and 34b embracing opposite sides of the indexing mechanism or platform. The platform 40 includes a mechanism which enters the central tubular support 18. The mechanism rotates the container relative to the stacker so that an empty container cell 22 is aligned with the front of the stacker. When that cell has been loaded with a predetermined number of signatures, the platform 40 is then shifted and rotatably indexed again so that the next empty cell is aligned with the front of the stacker to receive a stack of signatures. When all of the cells are filled, the container 16 is advanced off of the platform 40 and moved by the conveyor 34b to a storage location (not shown) or to an unloading station 43, as shown in Fig. 3, to be described.

At this point, an empty container can then be positioned on the platform 40 and the above cycle repeats itself.

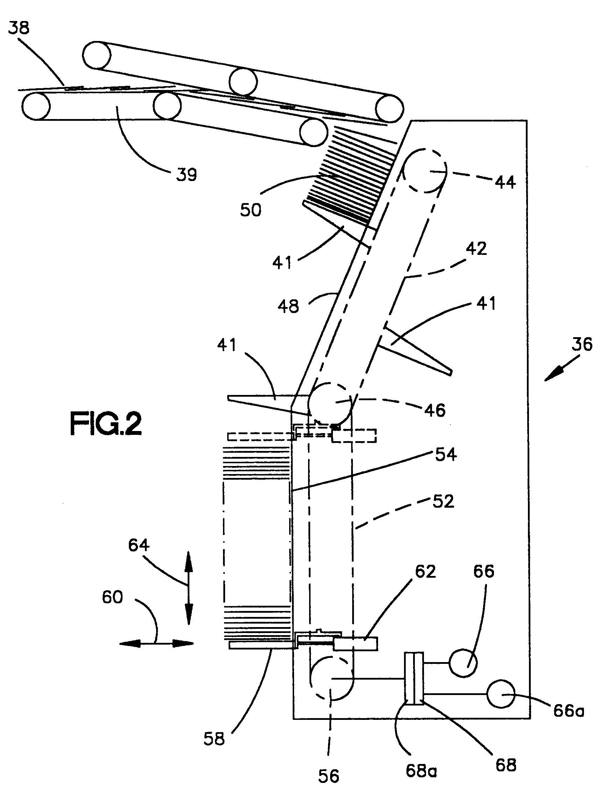

Details of the stacker 36 are schematically shown in Fig. 2. The stacker is provided with a plurality of platforms 41 which are mounted on an endless chain mechanism 42 trained around spaced apart sprockets 44 and 46. The chain mechanism 42 is positioned along the inclined front face 48 of the stacker 36 so that successive platforms intercept signatures from the signature conveyor 39. Movement of the chain 42 is timed to move the platforms 41 downwardly along the face 48 of the stacker at the same rate at which a stack 50 of signatures on a platform grows. This keeps the top of a growing stack of signatures at an intercept position registered with conveyor 39.

Whereas only three platforms 41 are shown attached to chain 42, there are, in reality, several more, for instance three additional platforms, the exact number being a function of stack height desired, size of equipment and speed of operation of the system components. The spacing between platforms is that necessary to allow one stack to be built before interception of the flow of signatures by a following platform and start of a new stack.

Details of the stacking mechanism above-described are disclosed in prior US-Patent No. 4,401,021 to Noll, Jr., assigned to the assignee of the present application, and in prior US-Patent No. 4,718,807 to Baxter, also assigned to the assignee of the present application. The disclosures of US-Patents Nos. 4,401,021 and 4,718,807 are incorporated by reference herein. As disclosed in US-Patent 4,401,021, a counter is arranged to count the number of signatures on a platform. Interception of the flow of signatures from conveyor 39 by a successive platform is initiated when a predetermined desired number of signatures are positioned on the platform being loaded.

The chain mechanism 42 is comprised of a pair of co-extensive chains, and alternate platforms 41 are mounted on one chain or the other. The chains are independently movable. As one platform 41 is being loaded, the chain for the next platform is advanced so that this platform is poised for interception of the stream of signatures 38 when loading of the preceding platform is completed. Rapid activation of an intercepting platform is achieved by pivotally mounting the platform on the respective chains. The platforms in the poised position are held in a raised spring-loaded mode by a latch which is adapted to release the platforms to the intercepting mode when loading of the preceding platform is completed. In this way, the continuous movement of the signatures can be maintained without interruption.

As shown in Fig. 2, the chain mechanism 42 and associated platforms are substantially co-extensive with the inclined face 48 of the stacker 22. A second chain mechanism 52 is provided below the mechanism 42 which is substantially co-extensive with the lower vertical face 54 of the stacker. This chain mechanism is trained around a lower sprocket 56 and an upper sprocket (not shown) which is coaxial with sprocket 46.

Attached to the chain mechanism 52 is a fork 58 which is adapted to be moved in and out from the face of the stacker in the direction of arrows 60, actuated by actuator 62, and which is adapted to be moved up and down in the direction of arrows 64 by movement of the chain mechanism 52. The chain mechanism 52 is driven by reversible motors 66 and 66a, coupled to the chain mechanism through clutch and brake mechanisms 68 and 68a. These are arranged to drive the chain at different speeds.

In operation, the fork 58 is initially positioned at its uppermost point of travel which is adapted to be slightly above the lowermost point of travel of the platforms 41. The platforms 41 are configured to mesh with and pass by the fork 58 in their downward travel so that a stack of signatures on a platform 41 is transferred from the platform 41 to the fork 58. The fork 58 on receipt of a stack of signatures is then lowered to its lowermost position, actuated by motors 66 and 66a. Initially, the stack 50 is reposed on an incline against upper face 48 when transferred to fork 58. In downward movement of the fork, the stack is deflected into a vertical repose by means of a deflecting surface at the point of juncture between the inclined face 48 and the vertical face 54 of the stacker.

Referring to Figs. 1 and 2, the fork 58 is in its uppermost position shown in Fig. 2 in dashed lines when a cell open side 28 is indexed so as to be adjacent the vertical face 54 of the stacker. The motors 66 and 66a are suitably timed to coincide with indexing of the container cells to lower a stack of signatures into an empty cell subsequent to indexing. This position of a stack of signatures is shown in full lines in Fig. 2. When a stack of signatures reaches the bottom of a cell, the fork 58 is withdrawn by means of actuator 62 so that the stack rests upon the bottom of the cell, and the container is then indexed for a repeat of the above procedure with the next cell. On withdrawal of the fork 58, it is quickly raised by motors 66 and 66a to its uppermost position to receive the next stack of signatures.

Above, it was indicated that the filled containers 16 following loading were transferred to an unloading station 43, shown in Fig. 3, or alternatively to a storage area (not shown). Normally, a container following loading will go to storage. When a book, magazine, or newspaper is ready for collating, the filled container will then be pulled from storage and transferred to the unloading station 43. Referring to Fig. 3, this is accomplished by means of conveyor section 34c. In Fig. 3, conveyor section 34d transports an emptied container 16 back to loader 36 for reuse.

At the unloading station 43, an advancing container 16 is received onto a platform 74 which is at that time in a horizontal position but which, in Fig. 3, is shown in a vertical, unloading position. For unloading, the container 16 is attached to the platform, and the platform is then pivoted about edge 76 so that the container cells extend horizontally. In Fig. 3, the platform 74 is shown in the after-pivoted, vertical position.

The platform 74 is a cubical element having open sides 78 and 80, a floor 82, a top 84, and closed sides 86 and 88. Initially, an advancing container 16 is admitted to the platform 74 through open side 80, and is positioned in the center of the platform. At this point, the container central support 18 is engaged by pins (not shown) seated in the floor 82 and top 84 adapted to hold the container in its centered position during pivoting of the platform and to rotate the container during unloading. These pins are square members adapted to seat within the square configuration of the central support 18 and are provided with a suitable actuating means (also not shown) to effect such seating and to index or rotate the containers.

On rotation of a container, one of the container cells is initially indexed to register with a hopper/loader 90 for a collator (not shown) or other desired processing apparatus. The top 84 of the platform 74 is suitably slotted at 92 so that signatures can be ejected from the registered container cell onto the hopper loader. Ejection is accomplished by means of a pusher element 94 reversibly movable along side 88 in the directions shown by arrows 96. The pusher element has tines 98 which are adapted to pass through slots 100 in the bottom of the container cells and engage the bottom of a signature stack 50. Movement of the pusher element in the direction of the hopper/loader along the cell open side 28 causes the stack of signatures to move onto the hopper/loader.

When a container cell is empty, the container 16 is then indexed about its longitudinal central axis 18 so that the next container cell can be unloaded. This is repeated until all of the container cells are empty. The platform 74 then pivots about its edge 76 so that it again extends horizontally. The empty container 16 at this point is then ejected from the platform through open side 78 onto conveyor section 34d for return to the stacker 36 or other location and another full container is received onto the platform for repeat of the above cycle.

An alternative to the unloading sequence of Fig. 3 is to unload the containers manually. Here also, the containers can be transported by means of the conveyor assembly onto a rotatable table which is provided with an indexing means to automatically index the containers for manual removal of signatures from the container cells by an individual positioned at a fixed spot at the unloading station. On emptying one cell, the container is then indexed by the indexing means actuated by the operator for manual removal of signatures from the next cell, which cycle is repeated until the container is emptied. The container can be emptied without the operator having to shift his position.

Above, it was indicated that an advantage of the present invention lay in improved handling and processing of stacks of signatures or other flat products. By grouping the stacks of signatures in a container having a plurality of cells, the stacks are protected from damage and are stably and securely transported from one location to another. At a loading or unloading station, the stacks of signatures can be more accurately registered with the loading or unloading means than if the stacks were transported in individual containers as in the Bain Patent 4,462,735. Accurate handling of a stack of signatures requires accurate registration with the handling means. Any displacement of an individual container from its position on a conveyor in the transfer step can result in misalignment of the container with the handling means and possible malfunction. The likelihood of such malfunction is minimized in the present invention by grouping the signature stacks in a plurality of connected container cells. By protecting the signatures from damage, the likelihood of misfeed at a processing location is also minimized.

## Claims

1. An apparatus for use in building and handling stacks of signatures, said apparatus comprising:
a stacker (36) to receive signatures (38) and form a stack of signatures,
said stacker comprising loading means (41, 58) for loading stacks of signatures into a plurality of containers (16),
conveyor means (34a and 34b) for sequentially transferring empty containers to said stacker and transferring containers holding stacks of signatures from said stacker,
said apparatus being characterized by each container (16) having wall means (20, 24) defining a plurality of cells (22), each of said cells having a substantially rectangular cross section with an open upper end portion and an opening extending along a side wall of the container from the open upper end portion to a lower end portion of the container, said loading means (41, 58) loading each of said cells (22) by lowering a stack of signatures into each of said cells (22) in turn with a portion of said loading means (58) extending through the opening in the side wall of the container into a cell (22) as a stack of signatures is lowered into the cell, and indexing means (40) for rotating each of said containers (16) in turn about a vertical axis to move a cell (22) with a stack of signatures therein away from said loading means (41, 58) and to simultaneously move an empty cell (22) of the container (16) toward said loading means (41, 58).

2. An apparatus as set forth in claim 1 wherein each of said containers (16) includes a plurality of walls (24) which intersect at a central portion (18) of the container and extend outwardly from the central portion of the container, each of said walls being common to adjacent cells (22) of the container.

3. An apparatus as set forth in claims 1 or 2 wherein each of said containers has four cells (22).

4. An apparatus as set forth in claims 1 or 2 further including an unloader (43) for moving stacks of signatures out of each of the containers (16) in turn through the open end portion of the cells.

## Patentansprüche

1. Vorrichtung für das Zusammenstellen und Behandeln von Stapeln von Druckerzeugnissen, umfassend:
eine Stapeleinrichtung (36) zum Erfassen von Druckerzeugnissen (38) und zum Formen eines Stapels von Druckerzeugnissen,
welche Stapeleinrichtung (36) Beladevorrichtungen (41, 58) zum Beladen einer Mehrzahl von Transportbehältern (16) mit Stapeln von Druckerzeugnissen aufweist; und
Transportmittel (34a, 34b) zur sequentiellen Überführung von leeren Transportbehältern (16) zu der Stapeleinrichtung (32) und zur Überführung von Transportbehältern (16), welche mit Druckerzeugnissen beladen sind, von der Stapeleinrichtung (32) weg,
dadurch gekennzeichnet,
dass jeder Transportbehälter (16) Wände (20, 24) zur Unterteilung des Transportbehälters (16) in eine Mehrzahl von Zellen (22) aufweist, wobei jede dieser Zellen (22) im wesentlichen rechteckigen Querschnitt aufweist und am oberen Ende offen ist und wobei eine Öffnung vorgesehen ist, welche sich entlang einer Seitenwand des Transportbehälters (16) vom oberen, offenen Ende in den Bereich des unteren Endes des Transportbehälters (16) erstreckt, dass die Zellen (22) durch die Beladevorrichtung (41, 58) nacheinander beladen werden indem jeweils ein Stapel von Druckerzeugnissen in die Zellen (22) abgesenkt wird, wobei ein Teil der Beladevorrichtung (58) während des Beladens der Zellen mit Stapeln von Druckerzeugnissen durch die Öffnung in der Seitenwand des Transportbehälters (16) ragt, und dass eine Indexiervorrichtung (40) zum Drehen von einem Transportbehälter (16) nach dem andern um eine vertikale Achse vorgesehen ist, so dass eine mit einem Stapel von Druckerzeugnissen beladene Zelle (22) von der Beladevorrichtung (41, 58) entfernt und gleichzeitig eine leere Zelle (22) des Transportbehälters (16) zur Beladevorrichtung (41, 58) hin bewegt wird.

2. Vorrichtung nach Anspruch 1, in welcher jeder dieser Transportbehälter (16) eine Mehrzahl von Wänden (24) aufweist, welche sich in einem zentralen Bereich (18) des Transportbehälters (16) kreuzen und sich von diesem zentralen Bereich (18) nach aussen hin erstrecken, und wobei jede dieser Wände (24) gemeinsam an benachbarte Zellen (22) der Transportbehälter (16) angrenzt.

3. Vorrichtung nach Anspruch 1 oder 2, wobei jeder dieser Transportbehälter (16) vier Zellen (22) aufweist.

4. Vorrichtung nach Anspruch 1 oder 2, welche zusätzlich eine Entladevorrichtung (43) zur aufeinanderfolgenden Entnahme von Stapeln von Druckerzeugnissen aus den Transportbehältern (16), durch das offene Ende der Zellen (22), aufweist.

## Revendications

1. Appareil de formation et de manipulation de piles de cahiers comprenant :
un dispositif d'empilage (36) destiné à recevoir des cahiers (38) et à former une pile de cahiers, ledit dispositif d'empilage comprenant des moyens de chargement (41, 58) destinés à charger des piles de cahiers dans plusieurs conteneurs (16),
des moyens d'acheminement (34a et 34b) destinés à transférer séquentiellement les conteneurs vides jusqu'audit dispositif d'empilage et à transférer les conteneurs contenant les piles de cahiers depuis ledit dispositif d'empilage,
ledit appareil étant caractérisé en ce que chaque conteneur (16) présente des moyens de cloisonnement (20, 24) définissant plusieurs cellules (22), chacune desdites cellules présentant une section transversale sensiblement rectangulaire avec une extrémité supérieure ouverte et une ouverture pratiquée tout le long d'une paroi latérale du conteneur de l'extrémité supérieure ouverte à une extrémité inférieure du conteneur, lesdits moyens de chargement (41, 58) chargeant chacune desdites cellules (22) en faisant descendre une pile de cahiers dans chacune desdites cellules (22) tour à tour, une partie desdits moyens de chargement (58) passant dans une cellule (22) à travers l'ouverture pratiquée dans la paroi latérale du conteneur quand on fait descendre une pile de cahiers dans la cellule, et des moyens d'indexation (40) destinés à faire tourner chacun desdits conteneurs (16) tour à tour autour d'un axe vertical pour écarter desdits moyens de chargement (41, 58) une cellule (22) contenant une pile de cahiers, et pour déplacer en même temps, une cellule vide (22) du conteneur (16) vers lesdits moyens de chargement (41, 58).

2. Appareil selon la revendication 1, dans lequel chacun desdits conteneurs (16) comprend plusieurs parois (24) qui se croisent en une partie centrale (18) du conteneur et sont disposées autour et à partir de la partie centrale du conteneur, chacune desdites parois étant commune à deux cellules (22) adjacentes du conteneur.

3. Appareil selon la revendication 1 ou la revendication 2, dans lequel chacun desdits conteneurs présente quatre cellules (22).

4. Appareil selon le revendication 1 ou la revendication 2 comprenant en outre un système de déchargement (43) destiné à faire sortir les piles de cahiers hors de chacun des conteneurs (16) tour à tour à travers l'extrémité ouverte des cellules.
